Europäisches Patentamt

European Patent Office

Office européen des brevets

(19)

(11) Publication number: **0 088 562**
**A2**

# EUROPEAN PATENT APPLICATION

(21) Application number: **83300966.5**

(22) Date of filing: **24.02.83**

(51) Int. Cl.³: **C 08 F 10/00, C 08 F 4/74**

(30) Priority: **26.02.82 GB 8205804**

(43) Date of publication of application: **14.09.83**
**Bulletin 83/37**

(84) Designated Contracting States: **BE DE FR GB IT NL SE**

(71) Applicant: **BP Chemicals Limited, Belgrave House 76 Buckingham Palace Road, London, SW1W 0SU (GB)**

(72) Inventor: **Licchelli, John Andrew BP Chemicals Limited, Bo'ness Road Grangemouth, Stirlingshire FK3 9XH Scotland (GB)**

(74) Representative: **Denbigh, Keith Warwick et al, BP INTERNATIONAL LIMITED Patents & Licensing Division Chertsey Road, Sunbury-on-Thames Middlesex, TW16 7LN (GB)**

(54) **Polymerisation catalyst.**

(57)    A modified catalyst suitable for polymerising 1-olefins prepared by (1) heat-activating a Phillips chromium oxide/refractory oxide catalyst and (2) contacting the active catalyst with a transition metal compound containing at least one pi-bonded ligand. Preferred transition metals in the pi-bonded compound are titanium, vanadium and chromium: the pi-bonded ligand can be an arene (eg benzene), a cyclic carbanion (eg cyclopentadienyl) or a cyclic corbonium ion (eg cycloheptatrienyl). Titanium (0) ditoluene is preferred. The catalyst can be used to (co)polymerise ethylene to give polyolefins having medium to broad molecular weight distribution.

EP 0 088 562 A2

Case 5312(2)

1

## POLYMERISATION CATALYST

The present invention relates to a catalyst suitable for polymerising 1-olefins and to a polymerisation process based thereon.

More particularly the invention relates to a modified Phillips polymerisation catalyst. Phillips catalysts which comprise a heat activated combination of chromium oxide and a refractory oxide support material have been extensively described in the literature. They are formed for example by supporting chromium trioxide, or a compound calcinable thereto, on a refractory oxide support material, for example silica, alumina, zirconia, thoria or silica-alumina and heating in a non-reducing atmosphere, preferably an oxidising atmosphere, to produce an active polymerisation catalyst. The produced catalyst can be used to polymerise 1-olefins using the so-called "solution form" or "particle form" process. In the "solution form" process the monomeric 1-olefin which is normally ethylene or a mixture of ethylene with up to about 40 wt % of other 1-olefins, is contacted with a suspension of the catalyst in a liquid hydrocarbon which is solvent for the polymer at the polymerisation temperature employed. In the "particle form" process the monomer 1-olefin is contacted with a suspension or a fluidised bed of the catalyst particles in a fluid medium under conditions such that the polymeric 1-olefin forms as solid particles suspended in or fluidised in the fluid medium. The fluid medium can be, for example, a liquid hydrocarbon or gas. Examples of suitable liquid hydrocarbons are isobutane and n-pentane. Examples of suitable gases are nitrogen or argon mixed with the gaseous monomer, or the undiluted gaseous monomer. Processes of this type are described in, for example UK Patent Specifications 790195, 704641, 853414, 886784 and 899156.

Modern processes for fabricating useful products from polyolefins, for example from polyethylene or from copolymers of ethylene with other 1-olefins, require a wide range of grades of polyolefins having specified physical properties rendering each grade suitable for a particular application. For example, a grade of polyethylene suitable for injection moulding will normally have a fairly high "melt index", i.e. a relatively low average molecular weight, and a narrow molecular weight distribution, whereas a blow moulding or film grade will normally have a lower melt index and a broader molecular weight distribution (ie a higher shear response).

In the Phillips process for polymerising 1-olefins, the average molecular weight of the produced polyolefin can be controlled by a variety of techniques, for example, by adjusting the polymerisation temperature or by using a chain transfer agent in the polymerisation reaction, whereas the molecular weight distribution of the produced polymer is generally dependent on the nature of the catalyst employed.

It is known that the physical properties, and hence the processing properties of polyolefins prepared using Phillips polymerisation catalysts can be influenced by heat activating the supported chromium compound in the presence of certain titanium compounds. For example, UK patent No. 1,326,167 discloses a process for preparing an olefin polymerisation catalyst wherein a dry chromium-containing support is heat activated with a titanium compound having the formula $R'_nTi(OR')_m$, $(RO)_mTi(OR')_n$ or $TiX_4$, where m is an integer of from 1-4, n is 0 or an integer of from 1-3, the sum of m+n is 4, R is an alkyl, aryl or cycloalkyl radical, or a combination of two or more such radicals, containing up to 12 carbon atoms, R' is a $C_2-C_{12}$ alkenyl radical, a cyclopentadienyl radical or a radical as specifed for R, and X is halogen. The Phillips catalyst modified with titanium in this manner polymerises ethylene to give polymer having a higher melt index (lower average MW) than similar unmodified catalysts.

An entirely different type of catalyst which can be used for polymerising 1-olefins is disclosed in US Patent No. 4121030. This catalyst comprises a transition metal component which is the product of contacting a transition metal compound of Groups IVA or VA of the Periodic Table, which compound contains at least one pi-bonded arene, with an inorganic compound which is (A) an inorganic oxide, an inorganic hydroxide, an inorganic oxyhalide, an inorganic hydroxyhalide or an inorganic halide, (B) a mixture of at least two compounds from A; or (C) a compound obtained by the reaction of at least two compounds from A. Examples of suitable transition metal compounds mentioned in US 4121030 are titanium (O) ditoluene and a titanium dichloride/aluminium chloride/arene complex. Polyethylene obtained by polymerising ethylene using this catalyst has a very high molecular weight as indicated by the fact that the melt flow index (at 190°C using a 2.16 kg weight) is too low to measure.

It is an object of the present invention to provide a modified catalyst capable of polymerising ethylene, or mixtures of ethylene with other 1-olefins to produce a variety of useful polyolefins. A further object of the present invention is to provide a modified catalyst which can be used to polymerise ethylene, or mixtures of ethylene together with other 1-olefins to give polyolefins having medium to broad molecular weight distribution.

Accordingly the present invention provides a modified polymerisation catalyst prepared by

(1) heating a Phillips catalyst precursor comprising a chromium compound and a refractory oxide support material under conditions that convert the precursor into an active polymerisation catalyst comprising chromium oxide supported on the refractory oxide support material and

(2) subsequently anhydrously contacting the produced active polymerisation catalyst with a transition metal compound of Groups IVA, VA or VIA of the Periodic Table, which transition metal compound contains at least one pi-bonded organic ligand, to give the modified polymerisation catalyst.

Phillips catalyst precursors comprising a chromium compound and a refractory oxide support material, and the heat activation of such precursors to produce olefin polymerisation catalysts have been extensively described in the patents literature, for example in UK patent specifications Nos 790195, 704641, 853414, 886784, 899156 and 1326167, and the preparation and activation of the precursor in the present invention can be in accordance with any of the known techniques.

The chromium compound in the precursor in the present invention can be, for example, chromic oxide ($CrO_3$), chromium sesquioxide ($Cr_2O_3$), chromium nitrate, chromium carbonate, chromium acetate, ammonium chromate, chromyl chloride, chromium acetylacetonate or tertiary butyl chromate. Chromic oxide and compounds which are readily calcinable to give oxides of chromium under the heat activation conditions are preferred.

The refractory oxide support material can be, for example, one or more oxides or mixed oxides selected from silica, silica-alumina, silica-titania, silica-magnesia, alumina, zirconia or thoria. Silica and silica-alumina are preferred support materials. Preferably the support materials have a mean particle diameter in the range .20 to 150 microns. Preferred grades of silica have a particle size in the aforesaid range and surface area in the range 150 to 800 square metres per gramme.

As is well known from the prior art refractory oxide support materials suitable for use in the preparation of Phillips catalysts can be prepared, for example by hydrolysing aqueous solutions comprising soluble compounds of, for example, silicon, aluminium, zirconium or thorium, optionally together with soluble compounds of titanium or magnesium, to produce a precipitate in the form of a hydrogel, and then drying the hydrogel to form a dry refractory oxide support material (frequently referred to in the art as a "xerogel"). Refractory oxide support materials prepared by such techniques are preferred in the preparation of the catalyst of the present invention.

In the preparation of the catalyst of the present invention the chromium compound and the refractory oxide support material may be brought together in any desired manner to form the Phillips precursor. For example the refractory oxide support can be impregnated with a finely divided solid chromium compound, with a liquid chromium compound, with the vapour of a volatile chromium compound or with an aqueous or non-aqueous solution of a soluble chromium compound. Examples of solutions that can be used to impregnate the support material are chromium trioxide/water, ammonium chromate/water, chromium acetate/water, tertiary butyl chromate/hexane and chromyl chloride $(CrO_2Cl_2)$/chloroform. Another suitable technique for forming the precursor comprises precipitating a hydrogel of the type hereinbefore described from aqueous solution in the presence of a chromium compound under conditions such that the chromium compound is coprecipitated with, or is adsorbed by, the hydrogel and drying the hydrogel to form the precursor. In another technique which can suitably be used in the preparation of the catalyst of the present invention the precursor is formed 'in situ' during the heat activation, for example by passing the vapour of a volatile chromium compound into a bed of the heated refractory oxide support material. An example of a suitable volatile chromium compound is chromyl chloride.

The quantity of chromium compound employed in preparing the precursor is suitably sufficient to provide a chromium concentration of at least 0.1%, preferably 0.2 to 30%, most preferably 0.3 to 5.0 wt % in the activated catalyst based on the total weight of the activated catalyst prepared in step 1.

The temperature to which the catalyst precursor must be heated to form an active polymerisation catalyst (hereinafter referred to as the activation temperature) is at least 250°C and not higher than the temperature at which the support commences to sinter. Preferably the activation temperature is in the range 400 to 900°C, most preferably 500 to 800°C. The heating time is suitably within the range 5 minutes to 24 hours, preferably 30 minutes to 15 hours although times outside the broader range can be employed if desired.

It was formerly believed that to be an effective polymerisation catalyst a "Phillips" catalyst must contain at least some chromium in hexavalent form. Whilst it is true that most, if not all, "Phillips" catalysts do contain hexavalent chromium it is now believed that the olefin polymerisation catalysis may operate through chromium in valency states below 6. Nevertheless it is desirable during the heat activation of catalysts of the type including the heat activation of the precursor in step 1 of the present invention, that conditions which favour the formation of, or retention of, chromium in the higher valency states should be employed. The heat activation is preferably carried out in a non-reducing atmosphere and most preferably in an oxidising atmosphere or in vacuo. Dry air is an example of a suitable oxidising atmosphere. The heat activation must be performed under anhydrous or dehydrating conditions and the activated polymerisation catalyst must be protected from ingress of moisture.

In step 2 of the preparation of the catalyst of the present invention the activated polymerisation catalyst produced in step 1 is modified by contacting with the defined transition metal pi-bonded compound. The transition metal present in the transition metal pi-bonded compound can be, for example titanium, vanadium, chromium, zirconium, niobium, molybdenum, hafnium, tantalum or tungsten. Titanium, vanadium and chromium are preferred. Titanium is · particularly preferred. The transition metal pi-bonded compound may contain only the pi-bonded ligand or ligands, or may contain other groups, for example halogen. The transition metal may be in the form of a complex with other compounds. In the transition metal pi-bonded compound the valency of the transition metal may be zero or any valency wherein the transition metal is able to form a stable compound containing at least one pi-bonded ligand.

By a pi-bonded organic ligand is meant throughout this specification an organic ligand which is formally a neutral compound, a group, an anion or a cation and which contains an unsaturated carbocyclic or heterocyclic ring system wherein the electrons are delocalised and form a pi-bond with the transition metal. Preferably the unsaturated carbocyclic or heterocyclic ring system contains six delocalised pi-electrons.

Examples of organic ligands which may be pi-bonded in the transition metal compound are arenes such as benzene, toluene, xylenes, durene (1,2,4,5-tetramethyl benzene), hexamethylbenzene, hexaethylbenzene, 1,2,4,5-tetraisopropylbenzene, diphenyl, naphthalene, phenanthrene, chlorobenzene and trifluoromethyl benzene; cyclic carbanions, for example the cyclopentadienyl anion or derivatives thereof; and cyclic carbonium ions, for example the cycloheptatrienyl cation or derivatives thereof.

Examples of suitable pi-bonded compounds are titanium (0) ditoluene, vanadium (0) ditoluene, chromium (0) dibenzene; titanium dichloride/aluminium chloride/arene complexes wherein at least one arene group is pi-bonded to the titanium and dicyclopentadienyl chromium. Titanium (0) ditoluene is preferred.

Titanium (0) ditoluene and vanadium (0) ditoluene can be prepared for example by metal vapour synthesis techniques as disclosed in US patent No 4121030 and also in J.C.S. Chem. Comm. 1973, pages 866 and 867. The preparation of a titanium dichloride/aluminium chloride/durene complex is disclosed in US patent No 4121030 at column 9.

The quantity of the transition metal pi-bonded compound employed in step 2 of the catalyst preparation is suitably sufficient to provide a concentration of transition metal in the range 0.001 to 5, preferably in the range 0.005 to 2, most preferably in the range 0.02 to 0.2 gramme atoms of transition metal per kilogramme of support material. The atomic ratio of chromium (derived from step 1) to transition metal (derived from step 2) in the final modified catalyst is preferably in the range 0.05 to 100.

The transition metal pi-bonded compound employed in step 2 may be contacted with the active polymerisation catalyst obtained from step 1 at any stage subsequent to the completion of the activation. The contacting may be effected in any desired manner which does not deleteriously affect the active polymerisation catalyst. The contacting can, for example, be carried out in the presence of an anhydrous hydrocarbon or other inert diluent in which the transition metal compound may, or may not be soluble, or the transition metal compound may be merely mixed or comminuted with the neat active polymerisation catalyst.

In another embodiment according to the present invention the contacting in step 2 is effected by synthesising the transition metal compound by metal vapour synthesis in the presence of the active polymerisation catalyst produced from step 1 of the catalyst preparation of the present invention. In this embodiment, examples of suitable transition metal pi-bonded compounds that can be made by metal vapour synthesis are titanium (O) ditoluene and vanadium (O) ditoluene. Examples of suitable inert support materials are refractory oxide support materials similar to those used in step 1 of the present invention.

The embodiment of the present invention wherein the transition metal pi-bonded compound is synthesised in the presence of the product from step 1 may be accomplished, for example, using the metal vapour synthesis apparatus illustrated in the drawings of US patent No. 4121030 by introducing the said inert solid material or the said product from step 1 into the glass flask (reference numeral 1 in USP 4121030) prior to evacuation of the air therefrom and carrying out the metal vapour synthesis as described therein.

The present invention further provides a process for polymerising one or more 1-olefins comprising contacting the monomeric 1-olefin under polymerisation conditions with the modified polymerisation catalyst of the present invention.

The monomeric 1-olefin employed in the polymerisation process of the present invention is preferably ethylene or a mixture of ethylene with one or more other comonomer 1-olefins. When comonomer 1-olefins are employed they preferably comprise up to 40 wt %, most preferably up to 25 wt % of the total monomer. Examples of comonomer 1-olefins are propylene, 1-butene, 1-pentene, 1-hexene, 1-octene and 4-methyl-1-pentene.

The polymerisation conditions employed in the process of the present invention can be, for example, any of the conditions used in the well-known Phillips polymerisation processes described, for example, in UK patent specification 790195; 804641; 853414; 886784; and 899156.

Preferably the polymerisation conditions are so called "particle form" process conditions. In the "particle form" process

the monomeric l-olefin is contacted with a suspension or a fluidised bed of the catalyst particles in a fluid medium under conditions such that the polymeric l-olefin forms as solid particles suspended in or fluidised in the fluid medium.

The fluid medium employed in particle form process conditions can be a liquid or a gas. Preferably it is a liquid. Examples of suitable liquid media are hydrocarbons which are chemically inert and non-deleterious to the modified catalyst under the reaction conditions. Preferred liquid media are paraffins or cycloparaffins having 3-30 carbon atoms per molecule, for example isopentane, isobutane, cyclohexane. Most preferably the liquid medium is isobutane.

When a liquid medium is employed in the process of the present invention preferably the concentration of monomer therein is in the range 2-30 wt % although concentrations outside this range can be employed if desired.

When the process of the present invention is under particle form process conditions the polymerisation temperature is preferably in range 50 to 112°C, most preferably 80 to 108°C.

The polymerisation pressure is preferably in the range 2 to 100 bar when the fluid medium is a liquid and 1 to 60 bar when the fluid medium is a gas. The residence of reaction time can vary from a few minutes to several hours and is generally in the range 15 minutes to 3 hours. The particle form process can be conducted under batch or continuous polymerisation conditions. Preferably the conditions are continuous. Preferred apparatus for conducting the reaction under continuous conditions in a liquid medium is described in UK patent specification 899156.

For further details of examples of solution form and particle form process conditions and apparatus which can suitably be employed in the process of the present invention, reference may be made to UK patent specification Nos: 790195, 804641, 899156, 886784 and 853414.

If desired, the polymerisation process can be conducted in the presence of hydrogen gas to increase the melt index of the produced polymer. In general, the higher the partial pressure of hydrogen in the reaction zone, the lower becomes the molecular weight of the produced polymer.

Polyethylene and ethylene copolymers produced by the process of the present invention generally have a relatively medium to broad molecular weight distribution rendering them suitable for a variety of applications, for example blow moulding and film-blowing. The polymers are generally produced at high productivity using the catalyst of the present invention so that for most applications it is generally unnecessary to remove catalyst residues from the polymer.

The invention is illustrated by the following Examples.

Examples 1 - 3

(a) Catalyst Preparations

In step 1 of Examples 1 and 2 of the catalyst preparation Davison ID969 catalyst, a commercial chromia on silica catalyst containing approximately 1% chromium by weight, was activated by heating for 5 hours at 700°C in a bed fluidised with 900 ml/min of dry air. The catalyst was then cooled under nitrogen and kept stored under nitrogen.

In step 1 of Example 3 Davison Magnapore 963 catalyst, a commercial silica-based cogel catalyst containing approximately 1% chromium by weight and 2.5% titanium by weight, was heat activated in a similar manner at 870°C.

In step 2 samples (0.2g) of each of the above catalysts were then slurried in approximately 10 ml of cyclohexane under nitrogen and between 12 mg and 24 mg of bis(toluene) titanium in toluene added (see Table). The resulting modified catalyst slurries were then used to polymerise ethylene.

(b) Polymerisation

Polymerisations were carried out in a 2.3 litre stainless steel stirred autoclave. The reactor was purged with nitrogen, baked out for 2 hours at 110°C, then cooled to the required polymerisation temperature. The modified catalyst prepared above was charged to the reactor followed by 1 litre of dry isobutane.

It will be seen from Table 1 that the Kd values of the polyethylene produced in Examples 1-3 (which are according to the present invention) range between 5.6 and 6.5 indicating that they have medium molecular weight distribution.

The molecular weight distribution may be narrowed or broadened (ie the Kd may be, respectively, reduced or increased) for example by decreasing or increasing the level of transition metal pi-bonded compound employed in step 2 of the present invention.

It will also be observed from Table 1 that the modified catalyst according to the present invention has produced polyethylene having relatively low density indicating that there is substantial chain branching. The use of unmodified Phillips catalysts in the homopolymerisation of ethylene generally leads to the production of polyethylenes having a density above 0.950 which have few or no chain branches in the molecular structure.

Test A

A catalyst was prepared as in Example 1, step 1 including the heat activation at 700°C but omitting step 2.

The catalyst was used to polymerise ethylene using the procedure described in Examples 1-3 (b). The polymerisation and polymer property data are recorded in Table 1. It will be seen that the polyethylene produced in Test A has narrower molecular weight distribution (as judged by lower Kd) and higher density than the polyethylene prepared in Examples 1-3.

TABLE 1

| Example No | Activated Catalyst ex Step 1 | | Bis(toluene) titanium Weight (mg) | Polymerisation | | | | Polymer Properties | | | |
|---|---|---|---|---|---|---|---|---|---|---|---|
| | Type | Weight (g) | | Time (min) | Temp. (°C) | Yield (g) | Activity (kg/kg.h) | $MI_{2.16}$ Note(3) | $MI_{21.6}$ Note (4) | Kd Note(5) | Density $(kg/m^3)$ Note(6) |
| 1 | ID969 Note(1) | 0.20 | 12.0 | 56 | 102 | 307 | 1645 | 1.1 | 75 | 5.6 | 931 |
| 2 | ID969 Note(1) | 0.21 | 24.0 | 99 | 98 | 355 | 967 | 0.14 | 15.6 | 6.5 | 930 |
| 3 | Magnapore 963 Note(3) | 0.20 | 12.5 | 60 | 96 | 331 | 1655 | 0.26 | 23.4 | 5.9 | 942 |
| Test A | ID 969 | 0.2 | 0 | 50 | 104 | 445 | 2670 | 0.14 | 11.6 | 3.8 | 958 |

Notes

(1) ID 969 catalyst activated at 700°C
(2) Magnapore 963 catalyst activated at 870°C
(3) Determined according to BS2783, method 105 C
(4) Determined by a method similar to that described in ASTM D1238, procedure A, condition F.
(5) Determined by a method similar to that given in Sabia, R.J. Appl. Poly. Sci. 1963, 7, 347.
(6) Determined by a method similar to that given in BS 2782, Part 5, 1965, Method 509B.

0088562

Claims:

**1.** A modified polymerisation catalyst prepared by
(1) heating a Phillips catalyst precursor comprising a chromium compound and a refractory oxide support material under conditions that convert the precursor into an active polymerisation catalyst comprising chromium oxide supported on the refractory oxide support material and
(2) subsequently anhydrously contacting the produced active polymerisation catalyst with a transition metal compound of Groups IVA, VA or VIA of the Periodic Table, which transition metal compound contains at least one pi-bonded organic ligand, to give the modified polymerisation catalyst.

**2.** A modified polymerisation catalyst as claimed in claim 1 wherein the refractory oxide support material comprises one or more oxides or mixed oxides selected from silica, silica-alumina, silica-titania, silica-magnesia, alumina, zirconia and thoria.

**3.** A modified polymerisation catalyst as claimed in claim 1 or 2 wherein the refractory oxide support material is silica having a mean particle diameter in the range 20 to 150 microns.

**4.** A modified polymerisation catalyst as claimed in any one of the preceding claims wherein the activation in step 1 is carried out at a temperature in the range 400-900°C.

**5.** A modified polymerisation catalyst as claimed in any one of the preceding claims wherein the transition metal present in the transition metal pi-bonded compound is titanium, vanadium or chromium.

**6.** A modified polymerisation catalyst as claimed in any one of the preceding claims wherein the transition metal pi-bonded compound contains an organic ligand selected from benzene, toluene, xylenes, durene, hexamethylbenzene, hexaethylbenzene, 1,2,4,5-tetraisopropylbenzene, diphenyl, naphthalene, phenanthrene, chlorobenzene, trifluoromethyl benzene, the cyclopentadienyl anion and the cycloheptatrienyl cation.

7. A modified polymerisation catalyst as claimed in any one of the preceding claims wherein the transition metal pi-bonded compound is titanium (0) ditoluene.

8. A modified polymerisation catalyst as claimed in any one of the preceding claims wherein the quantity of the transition metal pi-bonded compound employed in step 2 of the catalyst preparation is sufficient to provide a concentration of transition metal in the range 0.005-2 gramme atoms of transition metal per kilogramme of support material.

9. A process for polymerising one or more 1-olefins comprising contacting the monomeric 1-olefin under polymerisation conditions with the modified polymerisation catalyst claimed in any one of the preceding claims.

10. A process as claimed in claim 9 wherein the monomeric 1-olefin is ethylene or a mixture of ethylene with one or more comonomer 1-olefins selected from propylene, 1-butene, 1-pentene, 1-hexene, 1-octene and 4-methyl-1-pentene.

11. Polyolefins prepared by the process claimed in claim 9 or 10.